# EUROPEAN PATENT SPECIFICATION

(11) **EP 0 549 856 B1**
(45) Date of publication and mention of the grant of the patent: **17.01.1996**
(21) Application number: 92116161.8
(22) Date of filing: 22.09.1992
(51) Int. Cl.: E05B 3/00, F16B 21/18

(54) **An operating handgrip device for a latch**
Betätigungshandhabe eines Fallenschlosses
Poignée de manoeuvre d'une serrure à pêne de jour

(30) Priority: 24.12.1991 IT MI913486
(43) Date of publication of application: 07.07.1993
(73) Proprietor: SERRATURE MERONI S.p.A., I-20054 Nova Milanese (Milan) (IT)
(72) Inventor: Meroni, Gersam, I-20040 Capriano di Briosco, Milano (IT)
(74) Representative: Siniscalco, Fabio

(56) References cited:
- FR-A- 1 472 486
- FR-E- 51 961
- GB-A- 2 013 271
- US-A- 1 877 798

## Description

The present invention relates to an operating handgrip device for a latch, in which the handgrip is removably fixed to an operating shaft of a latch by retaining means operating between the handgrip and the shaft.

Handgrips on doors, sashes or the like are generally used both as operating members for latches and as grips to facilitate the opening and closing of doors, sashes etc., on which they are mounted. In cases where handgrips operate latches, they can either be fitted with a lock or not.

In the prior art, handgrips are fitted to doors, sashes, etc., in various ways.

If the handgrip is not an operating member, that is, it does not need to turn, it is generally fixed to the door or sash with screws, glue or other methods.

If, on the other hand, the handgrip is also used as an operating member, it is fixed to an operating shaft of the latch by retaining means including a grub screw which is screwed into the handgrip and engages a corresponding seat formed in the shaft.

However, this type of fixing system, by means of a grub screw is not without drawbacks.

A first drawback is that often, for aesthetic reasons, the grub screw is positioned hidden by the handgrip so that it is screwed only with difficulty into its seat in the operating shaft, which can mean the handgrip is badly fixed to the shaft.

A further drawback is that, in use of the handgrip the grub screw tends to loosen, leading to increased clearance between the handgrip and the operating shaft, thus contributing to premature wear of these latter and poor working of the operating handgrip device.

The technical problem underlying this invention is to provide an operating handgrip device for a latch which does not have the drawbacks described above.

From the prior document US-A-1877798 an operating handgrip device is known, comprising an handgrip removably fixed to an operating shaft by a spring clip held on the handgrip, having two elastically deformable arms which snap engage with a groove of the operating shaft.

According to the invention, a handgrip of the type described above with reference to the prior document US-A-1877798 is provided, intended for operating a latch, characterized in that the handgrip has a rear portion in which a recessed housing is formed having a base and a perimeter wall, a through hole formed in the handgrip to receive the operating shaft opens into the base, holding parts slidably hold the spring clip within the housing, an abutment within the housing is provided having divergent deflecting surfaces contacted by the ends of the arms of the spring clip, and the spring clip is flat and entirely housed within the housing and a slot passage is formed in the perimeter wall, through which a tool can pass to push the spring clip towards the abutment so that the ends of the arms slide on the divergent deflecting surfaces causing the spring clip to open and the arms to disengage from the groove of the operating shaft.

For a better understanding of the characteristics and advantages of the invention, there follows a description of a non-limitative embodiment thereof, illustrated in the appended drawings, in which:
Figure 1 shows in axial section an operating handgrip device for a latch made according to the present invention;
Figure 2 shows a cross-section, taken on the line II-II, of the operating handgrip device of Figure 1;

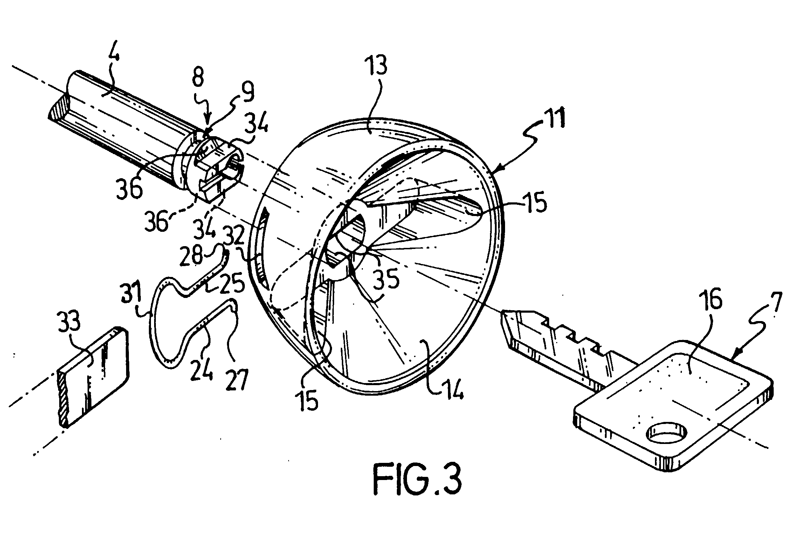

Figure 3 is an exploded frontal perspective view of the operating handgrip device of Figure 1;
Figure 4 is an exploded rear perspective view of the operating handgrip device of Figure 1; and
Figures 5 and 6 show, in enlarged cross-section, a disassembling sequence of the above operating handgrip device.

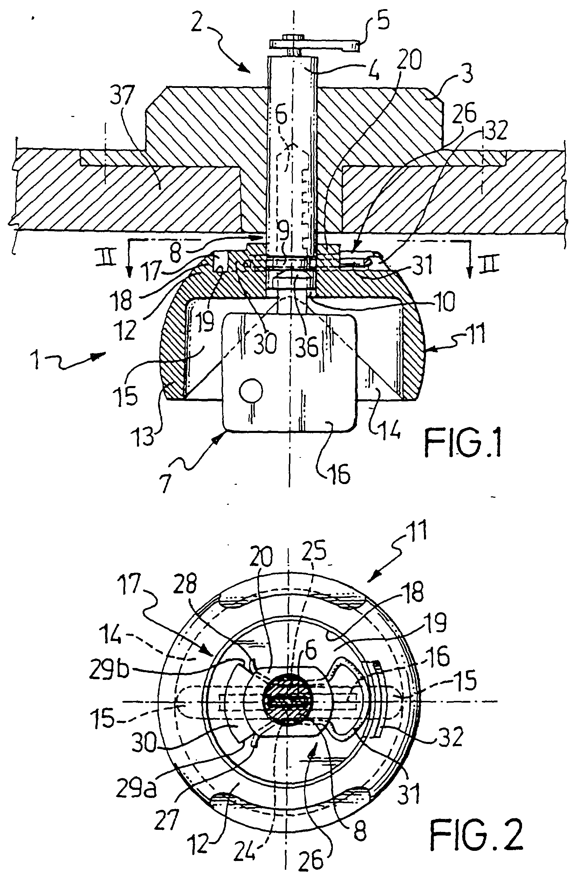

In Figure 1, an operating handgrip device 1 for a latch, with lock, comprises a handgrip 11 and lock 2.

The lock 2, of a known type, is made up of a drum 3 in which a cylinder 4 is rotatable and forms the operating shaft of a latch; in the example illustrated, the latch simply comprises a catch 5 fixed to the cylinder 4. Said cylinder 4 has a keyhole 6 into which fits a key 7.

The end portion 8 of the cylinder 4, at the opening of the keyhole 6, has a groove 9 and is lodged in a hole 10 formed in a rear portion 12 of the handgrip 11. In the end portion 8 of the cylinder 4 are also formed two flat parallel faces 34 which mate with two flat parallel faces 35 formed in the hole 10 so that the handgrip 11 and the cylinder 4 are fixed together for rotation.

The front portion 13 of the handgrip 11 is formed with a frustoconical cavity 14, in the bottom of which is the entrance to the keyhole 6. In the cavity 14 is formed an oblong seat 15 intended to receive a flat head 16 of the key 7 with form coupling.

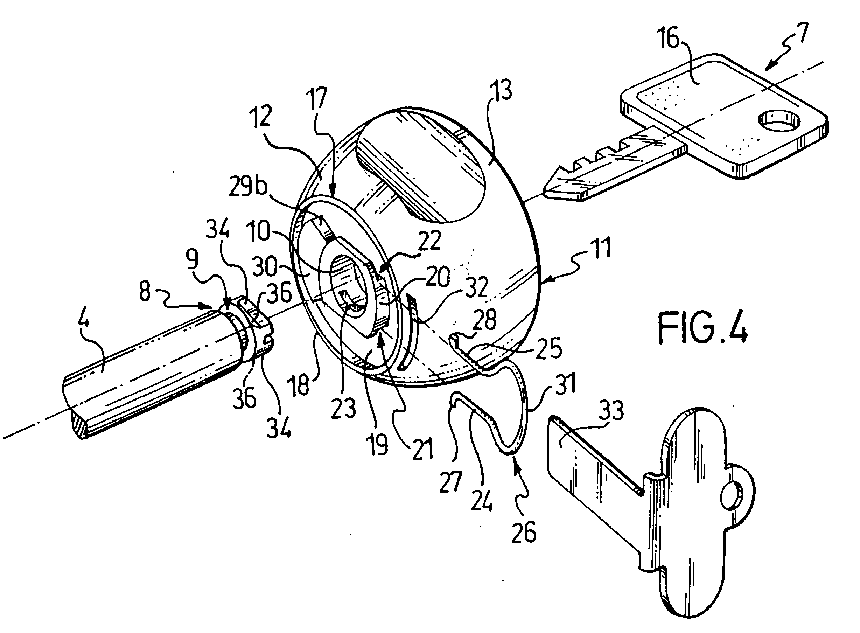

In the rear portion 12 of the handgrip 11 is formed a housing constituted by a recess 17 defined by a perimeter wall 18 and also by a base 19 into which opens the hole 10. In the recess 17, the edge of the hole 10 extends into a boss 20. In two opposite parallel sides of the boss 20 are two undercut recesses 21, 22, shown in Figure 4, into each of which opens a slot; Figure 4 shows only the slot in the undercut recess 21, indicated with 23. The elastically deformable arms 24, 25 of a spring clip 26 are slidably retained in the undercut recesses 21, 22 respectively. The distance between the arms 24, 25 is less than the diameter of the hole 10 so that a portion of each arm passes through a respective slot in the undercut recesses 21, 22 and engages the groove 9 of the cylinder 4. The ends 27, 28, of the arms 24, 25, are bent outwards and contact two divergent deflecting surfaces 29A and 29B of an abutment 30 fixed in the recess 17. The portion 31 of the spring clip 26 that links the arms 24, 25, fits against the perimeter wall 18 at a passage 32 formed in the said wall 18 and serves as a manoeuvring portion.

When the key 7 is fitted into the keyhole 6, the head 16 of the said key 7 fits into the seat 15 with form coupling, so it is substantially hidden in the cavity 14. When the key 7 is fitted into the keyhole 6, the lock 2 is released so that the turning of the handgrip 11 also rotates the cylinder 4 of the lock 2. The rotation of the cylinder 4 causes the rotation of the catch 5 which, in known manner, locks the door, sash or the like to which the illustrated operating handgrip device 1 is fitted.

The handgrip 11 is fitted to the lock 2 by inserting the end portion 8 of the cylinder 4 in the hole 10 so that the entry of the keyhole 6 faces the cavity 14 and in particular the seat 15 of the front portion 13 of the handgrip 11, and so that the arms 24, 25 of the spring clip 26 snap engage the groove 9 attaching the handgrip 11 to the cylinder 4. In these conditions, the recess 17 is facing the panel 37 of the door, sash or the like to which the operating handgrip device 1 is fitted, so that the spring clip 26 is hidden inside the recess 17. The end portion 8 of the cylinder 4 has two bevels 36 between the flat surfaces 34 and the groove 9 so that, when the handgrip 11 is fitted onto the cylinder 4, the arms 24, 25, whose distance from one to the other is less than the diameter of the cylinder 4, diverge elastically by interaction with the bevels 36 and snap into the groove 9.

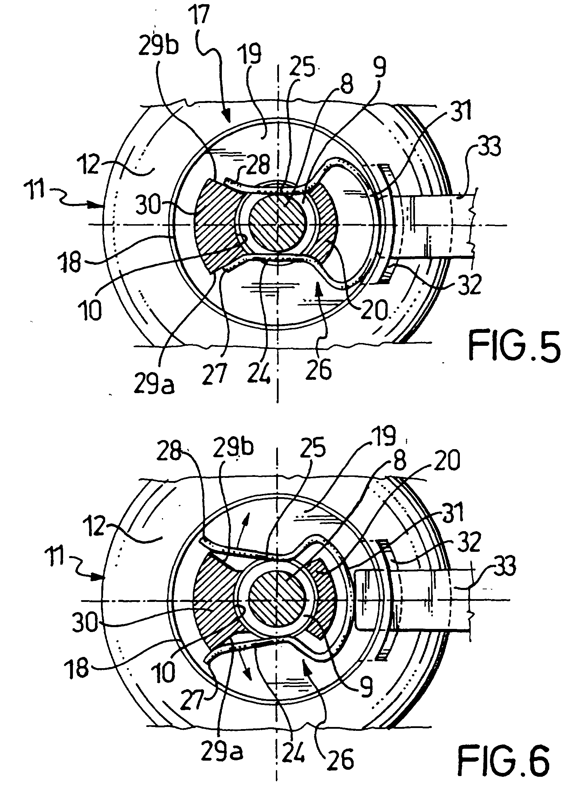

With reference to Figures 5 and 6, to remove the handgrip 11 from the lock 2, a tool, indicated in the drawings as 33, and adapted to push the manoeuvring portion 31 of the spring clip 26, is fitted into the passage 32. With one end of the tool 33 the manoeuvring portion 31 is pushed towards the abutment 30 so that the ends 27, 28 of the arms 24, 25 slide on the respective divergent deflecting surfaces 29A, 298 causing the arms to diverge. When the arms 24, 25 diverge they are released from the groove 9, permitting the release and removal of the handgrip 11 from the cylinder 4.

From the above description and the appended drawings, it is clear that the mounting of the handgrip 11 on the cylinder 4 of the latch is extremely easy and fast as the handgrip is simply slipped onto the cylinder.

In addition, thanks to the engagement of the spring clip 26 in the groove 9, the clearance between the handgrip 11 and the cylinder 4 remains constant and limited.

It should be noted that it is equally easy and fast to disassemble the handgrip 11 from the cylinder 4, this needing only one manoeuvre to open the spring clip 26 and slide the handgrip from the cylinder. Furthermore, thanks to the passage 32 in the handgrip 11, the spring clip 26 is readily accessible.

It is obviously possible to make alterations and/or additions to the embodiment described above and illustrated in the drawings.

The handgrip can be any shape and need not have a lock. The operating shaft can also be any shape. The latch can be of any type.

## Claims

1. An operating handgrip device (1) for a latch comprising an handgrip (11) removably fixed to an operating shaft (4) of the latch by a spring clip (26) held on the handgrip (11), having two elastically deformable arms (24,25) which snap engage with a groove (9) of the operating shaft (4), characterized in that the handgrip (11) has a rear portion (12) in which a recessed housing (17) is formed having a base (19) and a perimeter wall (18), a through hole (10) formed in the handgrip (11) to receive the operating shaft (4) opens into the base (19), holding parts (20-23) slidably hold the spring clip (26) within the housing (17), an abutment (30) within the housing (17) is provided having divergent deflecting surfaces (29A,29B) contacted by the ends (27,28) of the arms (24,25) of the spring clip (26), and the spring clip (26) is flat and entirely housed within the housing (17) and a slot passage (32) is formed in the perimeter wall (18), through which a tool (33) can pass to push the spring clip (26) towards the abutment (30) so that the ends (27,28) of the arms (24,25) slide on the divergent deflecting surfaces (29A,29B) causing the spring clip (26) to open and the arms (24,25) to disengage from the groove (9) of the operating shaft (4).

2. An operating handgrip device according to claim 1, wherein the sping clip (26) and the slot passage (32) lie on the same plane.

3. An operating handgrip device according to claim 1 or 2, wherein the edge of said through-hole (10) formed in the handgrip (11) extends into a boss (20) having two undercut recesses (21,22) which receive the arms (24,25) of the spring clip (26), respective slots (23) open into the recesses (21,22), and the arms (24,25) pass through the slots (23) to engage the groove (9) of the operating shaft (4).

4. An operating device according to any of the preceding claims, provided with a lock (2) comprising a cylinder (4) forming said operating shaft, wherein the handgrip (11) has a frontal cavity (14) into which said through-hole (10) formed in the handgrip (11) opens, the cylinder (4) has a keyhole (6) opening in the cavity (14), and in the cavity (14) a seat (15) is formed which is adapted to receive with form coupling a head (16) of a key (7) associated with the keyhole (6).

## Patentansprüche

1. Betätigungshandhabe (1) für ein Fallenschloß, welches einen Handgriff (11) aufweist, der abnehmbar auf einer Betätigungsstange (4) des Fallenschlosses durch eine federnde Klemme (26) auf dem Handgriff (11) befestigt ist, die zwei elastisch deformierbare Arme (24,25) aufweist, welche in eine Rille (9) der Betätigungsstange (4) einrasten,
dadurch **gekennzeichnet**,
daß der Handgriff (11) ein Rückteil (12) besitzt, in welchem ein ausgespartes Gehäuse (17) gebildet ist, welches eine Basis (19) und eine Umfangswand (18) aufweist,
daß ein in dem Handgriff (11) gebildetes Durchgangsloch (10) um die Betätigungsstange (4) aufzunehmen, sich in die Basis (19) öffnet,
daß Halteteile (20-23) gleitbar die federnde Klemme (26) innerhalb des Gehäuses (17) halten,
daß ein Widerlager (30) innerhalb des Gehäuses (17) vorgesehen ist, welches auseinandergehende ablenkende Flächen (29A,29B) aufweist, die von den Enden (27,28) der Arme (24,25) der federnden Klemme berührt werden, und
daß die federnde Klemme (26) flach und ganz innerhalb des Gehäuses (17) aufgenommen ist, wobei ein schlitzförmiger Durchgang (32) in der Umfangswand (18) gebildet ist, durch welchen ein Werkzeug (33) eingeführt werden kann, um die federnde Klemme gegen das Widerlager (30) zu drücken, so daß die Enden (27,28) der Arm (24,25) auf den auseinandergehenden ablenkenden Flächen (29A,29B) gleiten, wodurch erreicht wird, daß die federnde Klemme öffnet und die Arme (24,25) aus der Rille (9) der Betätigungsstange (4) ausrasten.

2. Betätigungshandhabe gemäß Anspruch 1, bei der die federnde Klemme (26) und der schlitzförmige Durchgang (32) in derselben Ebene liegt.

3. Betätigungshandhabe gemäß Anspruch 1 oder 2, bei der der Rand des Durchgangslochs (10), welches in dem Handgriff (11) gebildet ist, sich zu einem runden Vorsprung (20) erstreckt, der zwei unterschnittene Aussparungen (21,22) aufweist, welche die Arme (24,25) der federnden Klemme (26) aufnehmen, entsprechende Schlitze (23) in die Aussparungen (21,22) öffnen und die Arme (24,25) durch die Schlitze (23) zum Einrasten in die Rille (9) der Betätigungsstange (4) hindurchtreten.

4. Betätigungshandhabe gemäß einem der vorhergehenden Ansprüche, die mit einem Schloß (3), welches einen Zylinder (4) aufweist, der die Betätigungsstange bildet, versehen ist, wobei der Handgriff (11) einen nach vorne gerichteten Hohlraum (14) aufweist, in welchen das im Handgriff (11) gebildete Durchgangsloch (10) öffnet, der Zylinder (4) ein in den Hohlraum (14) öffnendes Schlüsselloch aufweist, und in dem Hohlraum (14) ein Sitz (15) gebildet ist, welcher so ausgebildet ist, daß er in Formkopplung einen Kopf (16) des Schlüssels (7), der dem Schlüsselloch (6) zugeordnet ist, aufnimmt.

## Revendications

1. Dispositif de poignée de manoeuvre (1) destiné à un verrou, comprenant une poignée (11) fixée de façon détachable à un arbre de manoeuvre (4) du verrou grâce à une pince à ressort (26) maintenue sur la poignée (11), ayant deux bras élastiquement déformables (24, 25) qui engagent par encliquetage une rainure (9) de l'arbre de manoeuvre (4), caractérisé en ce que la poignée (11) possède une partie arrière (12) dans laquelle un logement évidé (17) est formé, qui possède une embase (19) et une paroi de périmètre (18), un trou de passage (10) formé dans la poignée (11) et destiné à recevoir l'arbre de manoeuvre (4) débouche dans l'embase (19), des parties de maintien (20, 23) maintiennent en glissement la pince à ressort (26) à l'intérieur du logement (17), une butée (30) à l'intérieur du logement (17) est prévue qui possède des surfaces déflectrices divergentes (29A, 29B) mises en contact par les extrémités (27, 28) des bras (24, 25) de la pince à ressort (26), et la pince à ressort (26) est plate et entièrement logée à l'intérieur du logement (17) et un passage à fente (32) est formé dans la paroi de périmètre (18), à travers lequel un outil (33) peut passer pour pousser la pince à ressort (26) vers la butée (30), de sorte que les extrémités (27, 28) des bras (24, 25) glissent sur les surfaces déflectrices divergentes (29A, 29B), amenant la pince à ressort (26) à s'ouvrir et aux bras (24, 25) à se désengager de la rainure (9) de l'arbre de manoeuvre (4).

2. Dispositif de poignée de manoeuvre selon la revendication 1, dans lequel la pince à ressort (26) et le passage à fente (32) reposent sur le même plan.

3. Dispositif de poignée de manoeuvre selon la revendication 1 ou 2, dans lequel le bord dudit trou de passage (10) formé dans la poignée (11) s'étend dans une bosse (20) ayant deux évidements contre-dépouillés (21, 22) qui reçoivent les bras (24, 25) de la pince à ressort (26), des fentes respectives (23) s'ouvrent dans les évidements (21, 22) et les bras (24, 25) passent à travers les fentes (23) pour engager la rainure (9) de l'arbre de manoeuvre (4).

4. Dispositif de manoeuvre selon l'une quelconque des revendications précédentes, muni d'une serrure (2) comprenant un cylindre (4) formant ledit arbre de manoeuvre, dans lequel débouche la poignée (11) possède une cavité frontale (14) dans laquelle ledit trou de passage (10) formé dans la poignée (11), le cylindre (4) possède un trou de serrure (6) s'ouvrant dans la cavité (14), et dans la cavité (14) un siège (15) est formé qui est adapté pour recevoir par accouplement de formes une tête (16) d'une clef (7) associée au trou de serrure (6).
